# EUROPÄISCHE PATENTANMELDUNG

(11) **EP 4 748 551 A1**
(43) Veröffentlichungstag der Anmeldung: **27.05.2026**
(21) Anmeldenummer: 25212914.3
(22) Anmeldetag: 03.11.2025
(51) Int. Cl.: B29C 48/88, B29C 48/305, B29C 48/92

(54) **ANLEGEVORRICHTUNG, CASTING-UNIT SOWIE ANLAGE**

(30) Priorität: 21.11.2024 DE 102024134353
(71) Anmelder: Brückner Maschinenbau GmbH, 83313 Siegsdorf (DE)
(72) Erfinder: Maurer, Peter, 83101 Rohrdorf (DE)
(74) Vertreter: Flach Bauer & Partner Patentanwälte mbB

(57) **Zusammenfassung**

Eine Anlegevorrichtung (32) zum elektrostatischen Anlegen einer Folie (F) an eine Kühlwalze (28) hat eine erste Befestigungseinheit (36), eine zweite Befestigungseinheit (38), einen zwischen den Befestigungseinheiten (36, 38) liegenden Anlegebereich (A), eine Hochspannungsquelle (42), einer Elektrode (34), wenigstens einer Isoliervorrichtung (46) und wenigstens einen Schwingungstilger (44). Die wenigstens eine Isoliervorrichtung (46) erstreckt sich von der zugehörigen Befestigungseinheit (36, 38) zum Folienabschnitt (B) hin. Die Elektrode (34) verläuft von der ersten Befestigungseinheit (36) zur zweiten Befestigungseinheit (38) im Anlegebereich (A) und durch die wenigstens eine Isoliervorrichtung (46), und die Elektrode (34) ist durch die Hochspannungsquelle (42) mit Hochspannung beaufschlagt. Der Schwingungstilger (44) ist an der wenigstens einen Isoliervorrichtung (46) befestigt und dazu ausgebildet, Schwingungen der Elektrode (34) zu tilgen.

Ferner werden eine Casting-Unit (14) und eine Anlage (10) zur Herstellung einer Folie (F) bereitgestellt.

## Beschreibung

Die Erfindung betrifft eine Anlegevorrichtung zum elektrostatischen Anlegen einer Folie an einer Kühlwalze, eine entsprechende Casting-Unit sowie eine Anlage mit einer solchen Casting-Unit.

Beim Herstellen von dünnen Kunststofffolien wird zunächst eine Folie einer Kunststoffschmelze auf eine Kühlwalze aufgebracht, auf der sie abkühlt und erstarrt. Um eine homogene Abkühlung und somit homogene Materialeigenschaften zu gewährleisten, ist es notwendig, dass die Folie gleichmäßig über ihre gesamte Breite auf der Kühlwalze anliegt und zwar kontinuierlich über ihre Länge.

Um Deformationen der Folie durch mechanische Lösungen zum Anlegen zu vermeiden, ist es bekannt, mittels Elektroden ein elektrisches Feld mit hohen Feldstärken in der Nähe der Kühlwalzenoberfläche zu erzeugen, welches die Folie zu durchlaufen hat. Aufgrund des elektrischen Feldes werden die polaren Moleküle der Folie ausgerichtet. Es entsteht eine elektrostatische Anziehung zwischen der Folie und der Kühlwalze, sodass sich die Folie gleichmäßig und selbsttätig an die Kühlwalze anlegt.

Zur Erzeugung eines solchen elektrischen Feldes mit starken Feldstärken wird jedoch eine große Hochspannung von 8 kV oder mehr an den Elektroden benötigt, sodass es zu Funkenüberschlägen zwischen den Elektroden und der Kühlwalze kommen kann. Solche Funkenüberschläge beschädigen die Oberfläche der Kühlwalze und verringern auch die Qualität der hergestellten Folie.

Es ist daher Aufgabe der Erfindung, eine Anlegevorrichtung, eine Casting-Unit sowie eine Anlage bereitzustellen, bei denen Funkenüberschläge verringert werden.

Die Aufgabe wird gelöst durch eine Anlegevorrichtung zum elektrostatischen Anlegen einer Folie an eine Kühlwalze, mit einer ersten Befestigungseinheit, einer zweiten Befestigungseinheit, einem zwischen den Befestigungseinheiten liegenden Anlegebereich, einer Hochspannungsquelle, einer Elektrode, wenigstens einer Isoliervorrichtung und wenigstens einem Schwingungstilger. Die wenigstens eine Isoliervorrichtung erstreckt sich von der zugehörigen Befestigungseinheit zum Folienabschnitt hin. Die wenigstens eine Elektrode verläuft von der ersten Befestigungseinheit zur zweiten Befestigungseinheit im Anlegebereich und durch die wenigstens eine Isoliervorrichtung, und die Elektrode ist durch die Hochspannungsquelle mit Hochspannung beaufschlagt. Der Schwingungstilger ist an der wenigstens einen Isoliervorrichtung befestigt und dazu ausgebildet, Schwingungen der Elektrode zu tilgen.

Durch den Schwingungstilger werden Schwingungen der Isoliervorrichtung und damit auch Schwingungen der Elektrode, die unweigerlich während des Betriebs der Anlage auftreten, rasch getilgt, sodass solche Schwingungen sowohl schnell abklingen als auch geringere Amplituden haben. Dadurch wird vermieden, dass zu geringe Abstände zwischen der Elektrode und der Kühlwalze auftreten, die zu Überschlägen führen würden und auch ein Eintauchen der Elektrode in die Schmelzfahne aus der Düse wird nahezu ausgeschlossen. Zudem werden auf diese Weise starke Änderungen des Abstands zwischen der Elektrode und der Kühlwalze vermieden, die sich auf die Anlegekraft übertragen und damit negativ auf die optischen und/oder qualitativen Eigenschaften der Folie auswirken würden.

In einem Aspekt weist der Schwingungstilger eine Eigenfrequenz auf, die einer Eigenfrequenz der Elektrode entspricht, insbesondere der niedrigsten Eigenfrequenz der Elektrode, wodurch der Schwingungstilger besonders effizient Schwingungen der Elektrode tilgen kann.

Denkbar ist ebenfalls, dass der Schwingungstilger mehrere Eigenfrequenzen aufweist, wobei eine, mehrere oder alle der Eigenfrequenzen einer Eigenfrequenz der Elektrode entspricht.

Unter "entsprechen" wird in diesem Zusammenhang verstanden, dass die Eigenfrequenz des Schwingungstilgers gleich der Eigenfrequenz der Elektrode ist oder sich im Bereich von plus/minus 10% der Eigenfrequenz der Elektrode befindet.

In einer Ausführungsform weist der Schwingungstilger eine Basis, wenigstens eine Tilgermasse und wenigstens einen federnden Verbinder auf, wobei die Tilgermasse mittels des federnden Verbinders an der Basis beweglich befestigt ist, insbesondere wobei die Basis an der Isoliervorrichtung befestigt ist. Auf diese Weise ist ein einfacher und zuverlässiger Schwingungstilger realisiert.

Das Gewicht der Tilgermasse und der Abstand zwischen der Tilgermasse und der Basis sind derart gewählt, dass der Schwingungstilger eine Eigenfrequenz aufweist, die einer Eigenfrequenz der Elektrode entspricht.

Der Schwingungstilger kann zwei Tilgermassen und zwei federnde Verbinder aufweisen, wobei die beiden Tilgermassen gleich oder unterschiedlich sind und/oder mittels des jeweiligen federnden Verbinders in gleichem Abstand oder in unterschiedlichen Abständen zur Basis an der Basis befestigt sind, wodurch die eine oder mehrere Eigenfrequenzen des Schwingungstilgers auf einfache Weise eingestellt werden kann.

Jede Tilgermasse ist mittels jeweils einer der federnden Verbinder an der Basis befestigt. Insbesondere liegen die Tilgermassen und die Basis auf einer Geraden, wobei die Basis zwischen den beiden Tilgermassen angeordnet ist.

Der Schwingungstilger kann zwei verschiedene Eigenfrequenzen haben, beispielsweise wenn die Tilgermassen mit gleichem Gewicht in unterschiedlichem Abstand zur Basis angeordnet sind.

Zur weiteren Vereinfachung der Konstruktion kann die wenigstens eine Tilgermasse ein Gewichtstück sein und/oder der wenigstens eine federnde Verbinder kann ein federnder Stab sein.

In einer Ausführungsform weist die Anlegevorrichtung zwei Isoliervorrichtungen auf, die sich von je einer der entgegengesetzten Befestigungseinheiten aufeinander zu erstrecken. Durch die Isoliervorrichtung können Überschläge auf die Kühlwalze zuverlässig vermieden werden.

Die Isoliervorrichtungen erstrecken sich beispielsweise ausschließlich außerhalb des Folienabschnitts oder überlappen mit dem Film bzw. dem Folienabschnitt in einem Überlappbereich von 2 mm bis 15 mm.

Beispielsweise sind die Isoliervorrichtungen Isolierrohre, Isoliertüllen und/oder Isolierhülsen.

Für eine besonders effektive Tilgung kann der Schwingungstilger, insbesondere die Basis, an der Isoliervorrichtung befestigt sein.

Beispielsweise ist der Schwingungstilger, insbesondere die Basis, an die Isoliervorrichtung geschraubt, an die Isoliervorrichtung geklemmt, an die Isoliervorrichtung geklebt und/oder auf die Isoliervorrichtung gesteckt.

In einem Aspekt ist die wenigstens eine Elektrode bandförmig oder drahtförmig, insbesondere ein Draht, wodurch das elektrische Feld gezielt geformt werden kann. Insbesondere führt die Verwendung von bandförmigen Elektroden zu einem besonders homogenen elektrischen Feld, wodurch die Hochspannung - bei gleichem Anlegeeffekt - reduziert und damit Überschläge verringert werden können.

In einer Ausgestaltung ist die wenigstens eine Elektrode zwischen der ersten Befestigungseinheit und der zweiten Befestigungseinheit in ihre Längsrichtung verfahrbar, insbesondere wobei in der ersten und in der zweiten Befestigungseinheit wenigstens eine rotierbare Spule vorgesehen ist, auf der die wenigstens eine Elektrode teilweise aufgewickelt ist.

Dadurch können Ablagerungen auf der Elektrode, die die Qualität des elektrischen Feldes beeinträchtigen, abtransportiert werden.

In einem Aspekt weist der Anlegebereich einen Folienabschnitt auf, der in axialer Richtung dem Abschnitt der Kühlwalze entspricht, in dem die Folie aufgetragen wird, wobei der wenigstens eine Schwingungstilger außerhalb des Folienabschnitts angeordnet ist. Durch diese Anordnung wird eine Beschädigung der Folie durch den Schwingungstilger ausgeschlossen.

Für eine besonders zuverlässige Tilgung der Schwingungen können für jede Elektrode zwei Schwingungstilger vorhanden sein, wobei die Schwingungstilger auf unterschiedlichen Seiten des Folienabschnitts angeordnet sind.

Damit sich das elektrische Feld noch homogener ausbildet, kann die Anlegevorrichtung wenigstens zwei Elektroden, wenigstens zwei Isoliervorrichtungen und wenigstens zwei Schwingungstilger aufweisen, wobei die Schwingungstilger an den Isoliervorrichtungen unterschiedlicher Elektroden befestigt sind, insbesondere wobei die Schwingungstilger für unterschiedliche Elektroden auf der gleichen oder auf unterschiedlichen Seiten des Folienabschnitts angeordnet sind.

Die erste Elektrode kann bandförmig oder drahtförmig, insbesondere ein Draht sein, und/oder die zweite Elektrode kann bandförmig oder drahtförmig sein, insbesondere ein Draht sein.

Beispielweise verlaufen die Elektroden parallel zueinander und/oder weisen jeweils zwei Seitenflächen auf, wobei die Elektroden mit je einer ihrer Seitenflächen einander zugewandt sind.

In einer Ausführungsform weist die erste Befestigungseinheit und/oder die zweite Befestigungseinheit eine Dämpfungsvorrichtung auf, die dazu eingerichtet ist, Schwingungen der Elektrode im Anlegebereich zu dämpfen. Die Dämpfungsvorrichtungen führen zu einem noch schnelleren Abklingen der Schwingungen.

In einem Aspekt weist die Dämpfungsvorrichtung eine Dämpfungsrolle auf, deren Rotationsachse senkrecht zur Längsrichtung und senkrecht zur Richtung der Breite der Elektroden ist, wobei die Dämpfungsrolle in Richtung der Breite beweglich gelagert ist und auf einer Kante jeder der Elektroden aufliegt, insbesondere auf der der Kühlwalze abgewandten Kante.

Beispielsweise weist die Dämpfungsvorrichtung für jede Elektrode eine Dämpfungsrolle auf, deren Rotationsachsen senkrecht zur Längsrichtung und parallel zur Richtung der Breite der Elektrode ist, insbesondere wobei jede der Elektroden an einer der Dämpfungsrollen anliegt.

Die Isoliervorrichtung kann mittels wenigstens einem Dämpfer aus elastischem Material an der Dämpfungsvorrichtung befestigt sein.

Die Aufgabe wird ferner gelöst durch eine Casting-Unit mit einer Breitschlitzdüse, einer Kühlwalze und einer Anlegevorrichtung wie zuvor beschrieben, insbesondere wobei die Kühlwalze geerdet ist.

Ferner wird die Aufgabe gelöst durch eine Anlage zum Herstellen einer Folie, mit einer Casting-Unit wie zuvor beschrieben und einer Reckanlage, insbesondere eine Quer-, Längs- und/oder Simultan-Reckanlage, mit einem Ofen.

Die zur Anlegevorrichtung beschriebenen Merkmale und Vorteile gelten gleichermaßen für die Casting-Unit und/oder die Anlage und umgekehrt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1: eine schematische Ansicht einer Anlage gemäß einer Ausführungsform der Erfindung mit einer Kühlwalzeneinheit gemäß einer Ausführungsform der Erfindung,
- Fig. 2: die Kühlwalzeneinheit gemäß Figur 1 mit einer Anlegevorrichtung gemäß einer Ausführungsform der Erfindung in einer schematischen perspektivischen Darstellung,
- Fig. 3: eine Prinzipdarstellung der Anlegevorrichtung gemäß Figur 2,
- Fig. 4: eine perspektivische Darstellung einer Isoliervorrichtung der Anlegevorrichtung nach Figur 2 mit daran befestigtem Schwingungstilger,
- Fig. 5: den Schwingungstilger nach Figur 4 in perspektivischer Ansicht,
- Fig. 6: einen Schwingungstilger gemäß einer zweiten Ausführungsform in Seitenansicht,
- Fig. 7a,b: jeweils zwei Diagramme der Auslenkung in vertikaler bzw. horizontaler Richtung der Elektrode nach Anregung an einer Anlegevorrichtung ohne (oben) bzw. mit (unten) Schwingungstilger,
- Fig. 8: eine perspektivische Ansicht einer der Befestigungseinheiten gemäß Figur 2,
- Fig. 9: eine Dämpfungsvorrichtung der Befestigungseinheit gemäß Figur 8,
- Fig. 10: einen Schwingungstilger einer Anlegevorrichtung gemäß einer dritten Ausführungsform der Erfindung, und
- Fig. 11: einen Querschnitt durch eine Elektrode und eine Isoliervorrichtung gemäß einer vierten Ausführungsform der Erfindung.

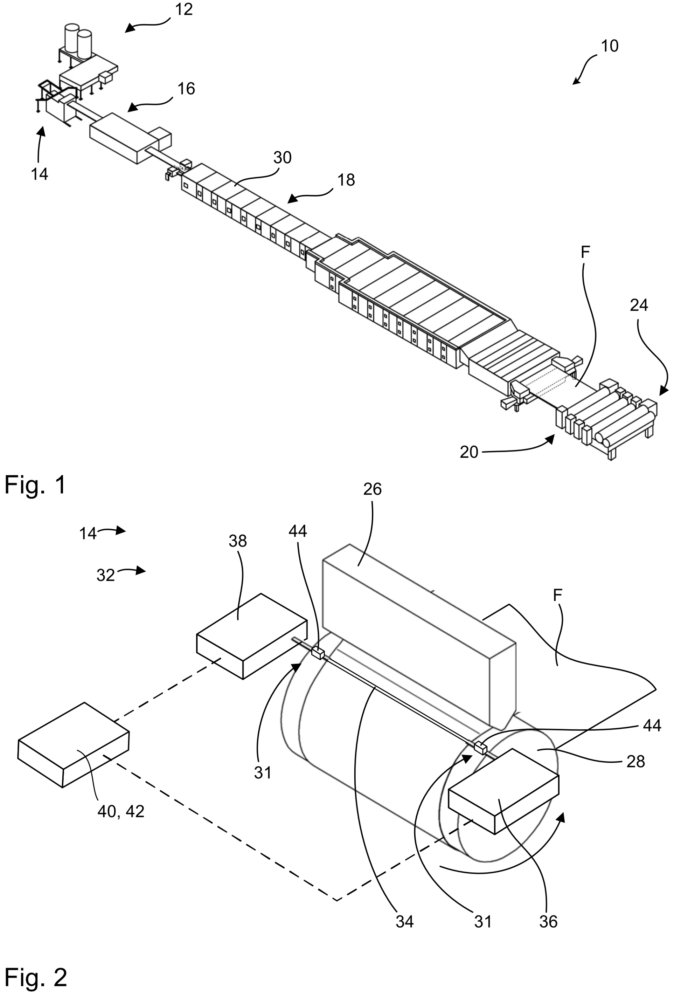

In Figur 1 ist äußerst schematisch eine Anlage 10 zur Herstellung einer Folie F dargestellt, die mehrere verschiedene Anlagen und Vorrichtungen umfasst.

Die Anlage 10 ist beispielsweise eine sequentielle Folienherstellungsanlage anhand der - ohne Beschränkung des Schutzbereichs - die Erfindung beispielhaft erläutert wird.

Im gezeigten Beispiel weist die Anlage 10 eine Extrusionsanlage 12, eine Casting-Unit 14, zumindest eine Längsreckanlage 16 (MDO, "Machine Direction Orienter"), eine Querreckanlage 18 (TDO, "Transverse Direction Orienter"), eine Behandlungseinrichtung 20 sowie eine Wickelvorrichtung 24 auf.

Die Extrusionsanlage 12 weist einen Extruder auf und ist dazu eingerichtet, aus wenigstens einem Ausgangsprodukt eine Schmelze zu erzeugen.

Beispielsweise ist der Extruder oder sind die Extruder ein Einschneckenextruder, Kaskadenextruder und/oder Doppelschneckenextruder.

Denkbar ist auch, dass andere Misch- und Aufbereitungsaggregate, wie ein Buskneter oder ein Planetwalzenextruder verwendet werden.

Mittels einer Breitschlitzdüse 26 wird die Schmelze auf eine Kühlwalze 28 der Casting-Unit 14 aufgetragen wird, wodurch eine Folie F erzeugt wird.

Ebenso ist es möglich, die Schmelze mittels Polymerisation zu erzeugen. Hierzu werden die Monomere (und optional Zusatzstoffe, wie Katalysatoren) in einem Reaktor und/oder einem Extruder der Extrusionsanlage 12 vermischt und polymerisiert. Die entstehende polymerisierte Schmelze kann dann direkt über die Düse 26 auf die Kühlwalze 28 der Casting-Unit 14 aufgetragen werden, wodurch die Folie F erzeugt wird.

Die erzeugte Folie F kann eine oder mehrere Lagen aufweisen. Denkbar ist bei einer mehrlagigen Folie, dass ein Extruder mehrere oder alle Lagen erzeugt, oder dass für jede Lage ein Extruder vorgesehen ist.

Anschließend wird die Folie F der Längsreckanlage 16 zugeführt und dort in Längsrichtung gereckt.

Die Querreckanlage 18, wie sie beispielsweise in der DE 10 2021 128 332 A1 beschrieben ist, hat entlang der üblichen Bewegungs- bzw. Abzugsrichtung der Anlage 10 einen Ofen 30 mit verschiedenen Zonen zur Temperierung der Folie F.

Im Ofen 30 wird die Folie F in an sich bekannter Weise erwärmt und durch die Querreckanlage 18 in Querrichtung gereckt, wodurch eine mono- oder, wie im Ausführungsbeispiel, biaxial orientierte Folie hergestellt wird.

Die optionale Behandlungsvorrichtung 20 ist beispielsweise eine Vorrichtung zur Aktivierung der Oberfläche der Folie F durch eine Coronabehandlung, beispielsweise um eine bessere Metallhaftung zu realisieren. Die Coronabehandlung kann einseitig oder beidseitig erfolgen.

Die Wickelvorrichtung 24 dient zum Aufwickeln der erzeugten Folie F und ist die in Abzugsrichtung letzte Vorrichtung. Sie weist eine Wickelhülse auf, auf der die Folie F aufgewickelt wird.

In Figur 2 ist die Casting-Unit 14 (auch Kühlwalzeneinheit genannt) in einer vergrößerten schematischen Ansicht dargestellt.

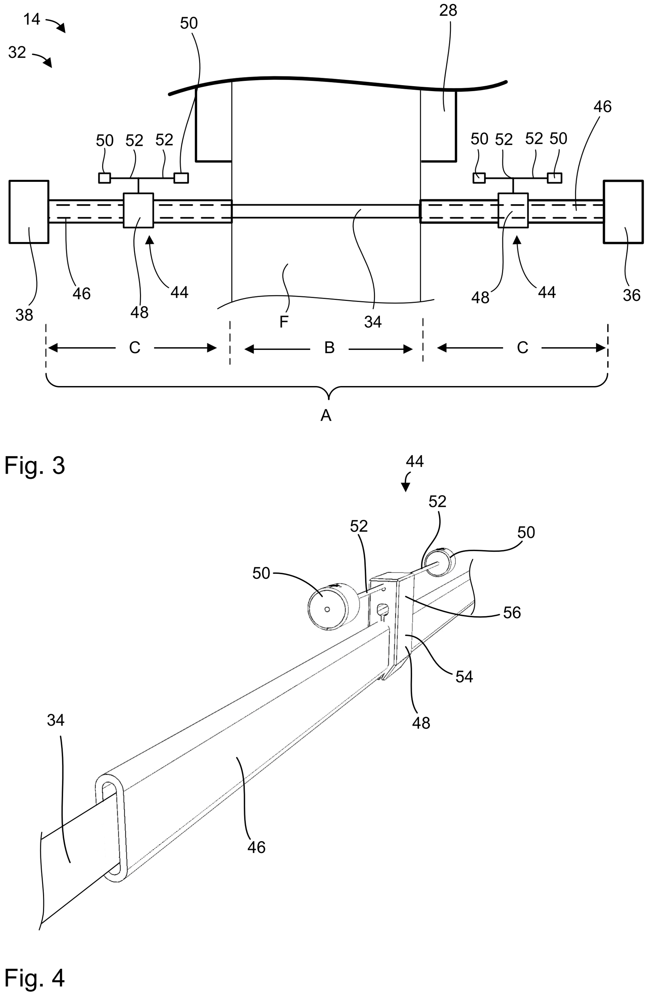

Die hier gezeigte Casting-Unit 12 umfasst die Breitschlitzdüse 26, die Kühlwalze 28 sowie eine Anlegevorrichtung 32. Figur 3 zeigt eine Prinzipdarstellung der Anlegevorrichtung 32.

Die Kühlwalze 28 ist gekühlt und wird daher auch "Chill Roll" genannt.

Die Breitschlitzdüse 26 ist oberhalb der Kühlwalze 28 angeordnet und dazu ausgebildet, die Kunststoffschmelze, die die Folie F bildet, kontinuierlich auf die Kühlwalze 28 aufzutragen. Der verwendete Kunststoff ist insbesondere ein Polyethylenterephthalat (PET). Die Verwendung von anderen Kunststoffen ist ebenso denkbar.

Die Folie F wird dann mittels der Anlegevorrichtung 32 an die Kühlwalze 28 gleichmäßig angelegt. Die Kühlwalze 28 dreht sich dabei in der Ansicht gemäß Figur 2 entgegen dem Uhrzeigersinn. Die auf diese Weise erzeugte Folie F wird schließlich, im gezeigten Ausführungsbeispiel nach etwa einer dreiviertel Drehung der Kühlwalze 28, von der Kühlwalze 28 abgelöst, ggf. noch abgekühlt und der Längsreckanlage 16 zugeführt.

Die Anlegevorrichtung 32 ist eine elektrostatische Anlegevorrichtung und weist wenigstens eine Elektrode 34, zwei Befestigungseinheiten, nämlich eine erste Befestigungseinheit 36 und eine zweite Befestigungseinheit 38, eine optionale Niederspannungsquelle 40, eine Hochspannungsquelle 42, wenigstens einen Schwingungstilger 44 sowie wenigstens eine Isoliervorrichtung 46 auf.

Im gezeigten Ausführungsbeispiel sind die Niederspannungsquelle 40 und die Hochspannungsquelle 42 als ein Gerät ausgebildet. Die Niederspannungsquelle 40 und die Hochspannungsquelle 42 können auch als getrennte Geräte ausgeführt sein.

Die Befestigungseinheiten 36, 38 sind in Axialrichtung der Kühlwalze 28 vor bzw. hinter der Kühlwalze 28 angeordnet. Zwischen den beiden Befestigungseinheiten 36, 38 ist ein Anlegebereich A ausgebildet. Der Anlegebereich A hat, ebenfalls in Axialrichtung der Kühlwalze 28 gesehen, einen Abschnitt, Folienabschnitt B genannt, der dem Bereich der Folie F auf der Kühlwalze 28 entspricht. Beispielsweise ist der Folienabschnitt B derjenige Abschnitt des Anlegebereichs A, der dem Abschnitt der Kühlwalze 28 in axialer Richtung entspricht, in dem die Folie F auf die Kühlwalze 28 aufgebracht wird.

Der Folienabschnitt B ist insbesondere von den Befestigungseinheiten 36, 38 beabstandet, sodass der Anlegebereich A zwei Außenabschnitte C aufweist, die jeweils zwischen dem Folienabschnitt B und einer der Befestigungseinheiten 36, 38 angeordnet sind.

Die Elektrode 34 ist jeweils in jeder der Befestigungseinheiten 36, 38 befestigt und erstreckt sich zwischen den beiden Befestigungseinheiten 36, 38, d. h. auch durch den Anlegebereich A.

Die Elektrode 34 ist beispielsweise, wie in der gezeigten Ausführungsform, bandförmig, d. h. sie hat eine Breite, die sehr viel länger als ihre Dicke ist, insbesondere um eine Größenordnung länger. Zudem haben sie in ihrer Längsrichtung eine Länge, die um Größenordnungen größer als ihre Breite ist.

Die Elektrode 34 hat somit zwei Seitenflächen, die sich in Längsrichtung der Elektrode 34 und in Richtung ihrer Breite erstrecken, sowie zwei Kanten. Eine der Kanten ist der Kühlwalze 28 zugewandt und eine der Kanten ist von der Kühlwalze 28 abgewandt. Die Richtung zwischen den Kanten der gleichen Elektrode 34 wird als die Richtung der Breite der Elektrode 34 bezeichnet. Insbesondere entspricht die Richtung der Breite für die Elektrode 34 der Radialrichtung der Kühlwalze 28.

Die Elektrode 34 hat beispielsweise eine Breite zwischen 3 mm und 15 mm, insbesondere eine Breite von mehr oder gleich 4 mm und von weniger als 13 mm. Denkbar ist beispielsweise eine Breite von 12,7 mm.

Denkbar ist, dass die Elektrode 34 nicht als Band, sondern drahtartig, d.h. beispielsweise rund, insbesondere als Draht ausgeführt ist. Denkbar sind zudem nahezu beliebige andere Querschnitte der Elektrode 34.

Die Elektrode 34 ist in Rotationsrichtung der Kühlwalze 28 nach der Breitschlitzdüse 26 angeordnet. Beispielsweise hat die Elektrode 34 einen Abstand zur Kühlwalze 28 von wenigstens der Dicke der Folie F auf der Kühlwalze 28, zum Beispiel von mindestens 2 mm. Höchstens hat die Elektrode 34 einen Abstand zur Kühlwalze 28 von 20 mm.

Die Elektrode 34 ist von der Hochspannungsquelle 42 mit einer Hochspannung beaufschlagt. Die Hochspannung beträgt beispielsweise zwischen 5 kV und 10 kV, insbesondere zwischen 7kV und 9 kV.

Die Kühlwalze 28 ist geerdet, sodass im Anlegebereich A ein starkes elektrisches Feld entsteht, durch das die Folie F geführt wird.

Zudem bildet sich ein geringer elektrischer Strom aus, der Pinningstrom genannt wird. Bei einer Hochspannung von 20 kV liegt der Strom beispielsweise bei etwa 30 mA. Bei einer Hochspannung von 9 kV kann ein Strom von etwa 12 mA entstehen.

Sollte die Elektrode 34 reißen, wird die Hochspannungsquelle abgeschaltet. Ein Riss der Elektrode 34 kann durch die Hochspannungsquelle mittels Flankenerkennung erfolgen.

Ebenfalls kann die Elektrode 34 durch die Niederspannungsquelle 40 mit einer Niederspannung beaufschlagt sein. Die Niederspannung beträgt beispielsweise weniger als 150 V, insbesondere zwischen 60 V und 130 V, beispielsweise 120 V. Die Hochspannung und die Niederspannung kaskadieren entsprechend.

Zudem sind, zusätzlich zur Elektrode 34, die zwei hohlen Isoliervorrichtungen 46 vorgesehen, die einander gegenüberliegend an den Befestigungseinheiten 36, 38 befestigt sind.

Die Isoliervorrichtungen 46 erstrecken sich beispielsweise, wie in der gezeigten Ausführungsform, von je einer der Befestigungseinheiten 36, 38 ausgehend aufeinander zu.

Die Isoliervorrichtungen 46 erstrecken sich durch den Außenabschnitt C des Anlegebereichs A bis zum Folienabschnitt B. Die Isoliervorrichtungen 46 decken somit den gesamten Außenabschnitt C ab, um Überschläge auf die Kühlwalze 28 zu vermeiden, die diese beschädigen könnten, und erstrecken sich insbesondere ausschließlich außerhalb des Folienabschnitts B. Alternativ können die Isoliervorrichtungen 46 mit dem Folienabschnitt B überlappen, beispielsweise mit einem Überlapp von 2 mm bis 15 mm für jede der Isoliervorrichtungen 46.

Denkbar ist ebenfalls, dass die Isoliervorrichtungen 46 nicht den gesamten Außenabschnitt C abdecken, sondern beanstandet zum Folienabschnitt F enden.

Die Elektrode 34 verläuft im Bereich zwischen den Befestigungseinheiten 36, 38, also im Anlegebereich A nacheinander durch beide der Isoliervorrichtungen 46. Genauer gesagt tritt die Elektrode 34 von der ersten Befestigungseinheit 36 ausgehend in die Isoliervorrichtung 46 ein und verläuft im Außenabschnitt C innerhalb der Isoliervorrichtung 46. Am Ende der Isoliervorrichtung 46 tritt die Elektrode 34 aus der Isoliervorrichtung 46 aus und verläuft dann blank durch den Folienabschnitt B.

Zu Beginn der anderen Isoliervorrichtung 46 im anderen Außenabschnitt C taucht die Elektrode 34 in die andere Isoliervorrichtung 46 und verläuft darin bis zur zweiten Befestigungseinheit 38.

Denkbar ist zudem, dass die Elektrode 34 zwischen den beiden Befestigungseinheiten 36, 38 in ihrer Längsrichtung verfahrbar ist. Hierzu ist, wie zu nachfolgenden Ausführungsformen beschrieben, in der ersten Befestigungseinheit 36 und in der zweiten Befestigungseinheit 38 eine rotierbare Spule vorgesehen, auf die die Elektrode 34 teilweise aufgewickelt ist. In diesem Zusammenhang spricht man auch von Spuleinheiten anstelle von Befestigungseinheiten.

Die Elektrode 34 ist zwischen den Befestigungseinheiten 36, 38 mechanisch gespannt, beispielsweise mit einer Kraft von 200 N. In Abhängigkeit dieser mechanischen Spannung, der Breite der Elektrode 34 und der Länge des Anlegebereichs A weist die Elektrode 34 eine bestimmte Eigenfrequenz auf.

In Figur 4 ist eine perspektivische Ansicht einer der Isoliervorrichtungen 46 und der Elektrode 34 beispielhaft gezeigt, wobei ebenfalls einer der Schwingungstilger 44 dargestellt ist. Die entsprechende Befestigungseinheit 36, 38 ist aus Gründen der Übersichtlichkeit weggelassen.

Die Elektrode 34 ist innerhalb der Isoliervorrichtung 46 frei beweglich angeordnet und kann durch die Isoliervorrichtung 46 hindurch bewegt werden.

Wie zu erkennen ist, ist die Isoliervorrichtung 46 zum Beispiel ein Isolierrohr, eine Isoliertülle und/oder eine Isolierhülse. Sie hat einen länglichen Querschnitt, der annähernd rechteckig ist. Beispielsweise sind die Ecken abgerundet oder die kurzen Seiten sind durch bogenförmige Abschnitte gebildet.

Die Innendurchmesser der Isoliervorrichtungen 46 in ihrer Längsrichtung entsprechen dabei der Breite der Elektrode 34, sodass die Elektrode 34 in den Isoliervorrichtungen 46 geführt werden kann.

Im gezeigten Ausführungsbeispiel umgeben die Isoliervorrichtungen 46 die aufgenommene Elektrode 34 entlang ihres Umfangs jeweils vollständig.

Denkbar ist jedoch auch, dass die Elektrode 34 nicht vollständig umschlossen ist, solange sie mit ihrer der Kühlwalze 28 zugewandten Seite von der jeweiligen Isoliervorrichtung 46 umschlossen ist.

Die Isoliervorrichtungen 46 sind aus einem Kunststoff hergestellt, insbesondere aus Polyetheretherketon, PEEK. Insbesondere ist das PEEK ein getempertes PEEK. Isoliervorrichtungen 46 aus getempertem PEEK haben sich als besonders langlebig erwiesen. Denkbar sind auch andere Materialien zur Herstellung der Isoliervorrichtungen 46, beispielsweise Polytetrafluorethylen (PTFE), Polyphthalamide (PPA) oder Polyetherketone (PEK), sofern sie über eine ausreichend hohe Durchschlagsfestigkeit verfügen und bei Temperaturen von mehr als 150°C formstabil sind.

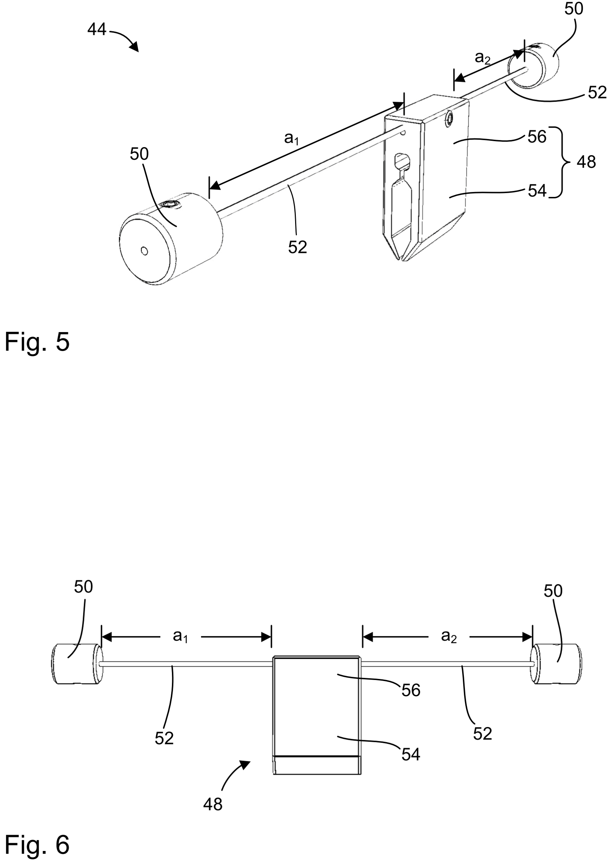

An der Isoliervorrichtung 46 ist der Schwingungstilger 44 befestigt. In den Figur 5 ist der Schwingungstilger 44 in perspektivischer Ansicht dargestellt.

Die Befestigung am Schwingungstilger 44 erfolgt derart, dass der Schwingungstilger 44 auf der Isoliervorrichtung 46 fest sitzt, aber die Beweglichkeit der Elektrode 34 in der Isoliervorrichtung 46 nicht beeinträchtigt ist.

Die Anlegevorrichtung 32 hat beispielsweise, wie im gezeigten Ausführungsbeispiel, zwei Schwingungstilger 44, die identisch ausgeführt sind.

Der Schwingungstilger 44 hat eine Basis 48, zwei Tilgermassen 50 sowie zwei federnde Verbinder 52.

Die Basis 44 kann, wie die Isoliervorrichtungen 46, aus einem Kunststoff hergestellt sein, insbesondere aus Polyetheretherketon, PEEK. Insbesondere ist das PEEK ein getempertes PEEK. Denkbar sind auch andere Materialien zur Herstellung der Basis 44, beispielsweise Polytetrafluorethylen (PTFE), Polyphthalamide (PPA) oder Polyetherketone (PEK), sofern sie über eine ausreichend hohe Durchschlagsfestigkeit verfügen und bei Temperaturen von mehr als 150°C formstabil sind.

Die Basis 48 hat einen Befestigungsabschnitt 54 und einen Verbindungsabschnitt 56, an dem die federnden Verbinder 52 befestigt sind.

Der Befestigungsabschnitt 54 und der Verbindungsabschnitt 56 können zusammen einstückig ausgeführt sein, sodass die Basis 48 einstückig ist.

Beispielsweise handelt es sich bei der Basis 48 um ein Spritzgussteil oder ein 3D gedrucktes Element aus Kunststoff. Die Verwendung anderer Materialien, wie Metalle oder Gemische aus Kunststoff und Metall, ist ebenfalls möglich.

Der Befestigungsabschnitt 54 dient zur Befestigung an der Isoliervorrichtung 46 und ist im gezeigten Ausführungsbeispiel als Klammer ausgebildet.

Im befestigten Zustand umgreift der Befestigungsabschnitt 54 die Isoliervorrichtung 46 und befestigt somit den Schwingungstilger 44.

Beispielsweise kann der als Klammer ausgeführte Befestigungsabschnitt 54 mittels einer Schraube zuverlässig geschlossen werden.

Denkbar ist, dass die Basis 48 an die Isoliervorrichtung 46 geschraubt oder auf sie aufgesteckt ist.

Denkbar ist ebenfalls, dass der Schwingungstilger 44 nur eine Tilgermasse 50 oder mehr als zwei Tilgermassen 50 oder nur einen federnden Verbinder 52 bzw. mehr als zwei federnde Verbinder 52 aufweist.

Die Tilgermassen 50 sind im gezeigten Ausführungsbeispiel als Gewichtstücke ausgeführt, beispielsweise als Zylinder aus einem Vollmaterial. Das Material der Tilgermassen 50 kann beispielsweise Blei, Stahl, Kunststoff, Aluminium oder eine Mischung aus diesen Materialien sein.

Denkbar ist ebenfalls, dass die Gewichtstücke eine beliebige andere Form haben, wie quaderförmig, kegelförmig oder rund- bzw. kugelförmig.

Im gezeigten Ausführungsbeispiel sind die federnden Verbinder 52 federnde Stäbe.

Jede der Tilgermassen 50 ist mittels der federnden Verbinder 52 am Verbindungsabschnitt 56 der Basis 48 befestigt.

Die federnden Verbinder 52 erstrecken sich in axialer Richtung, d.h. auch parallel zur Elektrode 34.

Beispielsweise erstrecken sich die federnden Verbinder 52 entgegengesetzt zueinander, sodass die Tilgermassen 50 ebenfalls in Bezug auf die Basis 48 entgegengesetzt zueinander sind. Die Basis 48 liegt somit in axialer Richtung zwischen den Tilgermassen 50.

Die Tilgermassen 50 und die Basis 48 liegen auf einer Geraden, entlang der sich die federnden Verbinder 52 erstrecken.

Die Tilgermassen 50 sind auf diese Weise gegenüber der Basis 48 beabstandet und beweglich gelagert, da die federnden Verbinder 52 eine Bewegung der Tilgermassen 50 zulassen.

Im gezeigten Ausführungsbeispiel ist eine der Tilgermassen 50 in einem ersten Abstand a₁ und die zweite Tilgermasse 50 in einem zweiten Abstand a₂ von der Basis 48 entfernt angeordnet.

Der Schwingungstilger 44 hat zumindest eine Eigenfrequenz, die vom Gewicht der Tilgermasse 50 und deren Abstand a₁, a₂ zur Basis 48 abhängt. Der Schwingungstilger 44 kann auch mehrere Eigenfrequenzen haben, beispielsweise zwei Eigenfrequenzen, wie im gezeigten Ausführungsbeispiel.

Im gezeigten Ausführungsbeispiel sind die Gewichte der Tilgermassen 50 identisch, jedoch sind die Abstände a₁, a₂ unterschiedlich, wodurch zwei unterschiedliche Eigenfrequenzen des Schwingungstilgers 44 entstehen.

Denkbar ist ebenfalls, dass sowohl die Tilgermassen 50 als auch die Abstände a₁ und a₂ der Tilgermassen 50 zur Basis 48 identisch sind, wodurch der Schwingungstilger 44 lediglich eine Eigenfrequenz hat.

Die Eigenfrequenz bzw. die Eigenfrequenzen des Schwingungstilgers 44 sind derart gewählt, dass sie bzw. eine der Eigenfrequenz der Elektrode 34 entspricht. Beispielsweise bedeutet "entsprechend" in diesem Zusammenhang, dass die einander entsprechenden Eigenfrequenzen gleich sind oder eine Abweichung von höchstens ± 10% zueinander haben.

Insbesondere entspricht die Eigenfrequenz des Schwingungstilgers 44 der niedrigsten Eigenfrequenz der Elektrode 34.

Beispielsweise beträgt die Eigenfrequenz für eine Elektrode 34 mit einer Breite von 12 mm, einer Länge von 4,2 m bei einer mechanischen Spannung von 200 N etwa 24,8 Hz.

Denkbar ist auch, dass die Elektrode 34 mehrere Eigenfrequenzen aufweist. Insbesondere weist sie als Eigenfrequenzen die höheren Harmonischen der niedrigsten Eigenfrequenz auf.

Beispielsweise beträgt eine der Eigenfrequenzen des Schwingungstilgers 44 24,8 Hz, wodurch der Schwingungstilger 44 auf das zuvor genannte Beispiel der Elektrode 34 abgestimmt ist.

In Figur 6 ist ein Schwingungstilger 44 einer zweiten Ausführungsform der Anlegevorrichtung 32 dargestellt. Der Schwingungstilger 44 dieser Ausführungsform hat lediglich eine Eigenfrequenz, da die Tilgermassen 50 gleich schwer sind und beide im gleichen Abstand, d.h. a₁ = a₂, zur Basis 48 angeordnet sind.

Wie in Figur 3 zu erkennen, sind die beiden Schwingungstilger 44 der Anlegevorrichtung 32 der gezeigten Ausführungsform auf unterschiedlichen Seiten des Folienabschnitts B angeordnet.

Während des Betriebs der Reckanlage 10 wird mittels der Anlegevorrichtung 32, insbesondere der mit Hochspannung beaufschlagten Elektroden 34, ein elektrisches Hochspannungs-Feld zwischen der Elektrode 34 und der Kühlwalze 28 erzeugt. Die Folie F durchläuft das elektrische Feld aufgrund der Drehbewegung der Kühlwalze 28.

Durch das elektrische Feld wird die Oberfläche der Kühlwalze 28 elektrisch aufgeladen und die polaren Moleküle des Kunststoffmaterials der Folie F richten sich aus. Dadurch entsteht eine elektrostatische Anziehungskraft zwischen der Kühlwalze 28 und der Folie F. Durch diese Anziehungskraft wird die Folie F gleichmäßig an die Kühlwalze 28 angelegt.

Im Betrieb der Anlage 10 kann es zu Schwingungen der Elektrode 34 kommen, beispielsweise wird die Elektrode 34 durch Überschläge, Schmelzeninhomogenitäten, ungleiche Verteilung von Pinningadditiven, einen Luftzug oder auch andere Einflüsse aufgrund ihrer Länge in Schwingung versetzt. Die Elektrode 34 schwingt dann in ihrer Eigenfrequenz.

Durch die Befestigung des Schwingungstilgers 44 an der Isoliervorrichtung 46 wird die Schwingung auf den Schwingungstilger 44 übertragen, und die Tilgermassen 50 werden ebenfalls in Bewegung versetzt, sodass der Schwingungstilger 44 in seiner Eigenfrequenz schwingt. Da die Eigenfrequenz des Schwingungstilgers 44 der Eigenfrequenz der Elektrode 34 entspricht und die Phase der Schwingung des Schwingungstilgers 44 entgegengesetzt zur Phase der Schwingung der Elektrode 34 ist, wird die Schwingung in der Elektrode 34 stark reduziert.

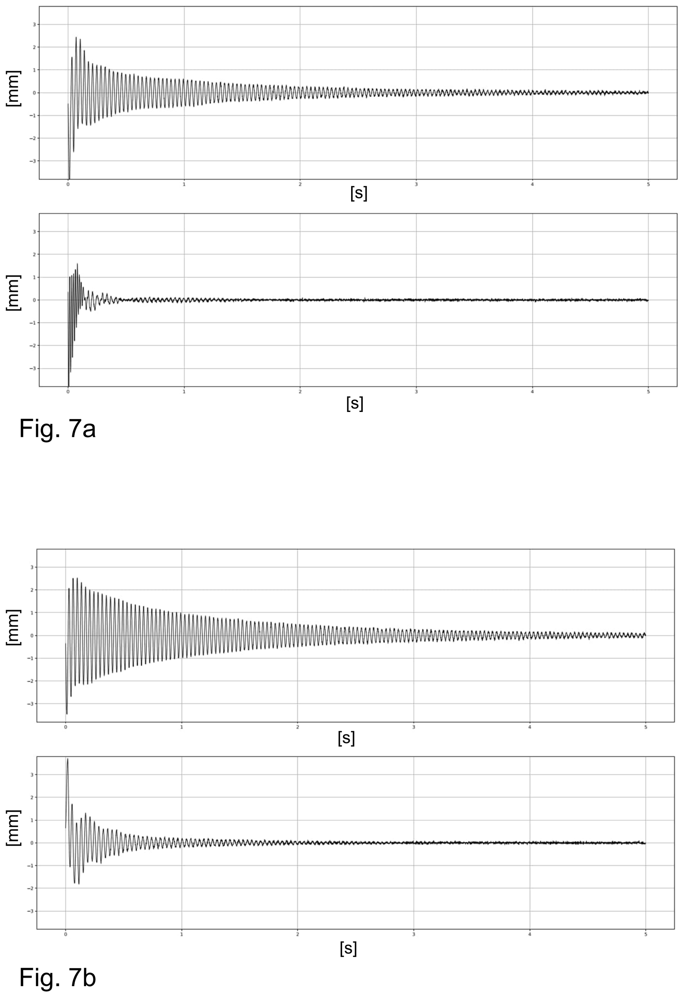

Beispielsweise sind in Figur 7a zwei Graphen dargestellt, die die Schwingungen der Elektrode 34 in vertikaler Richtung nach einer Anregung darstellen, wobei das untere Diagramm die Auslenkung bzw. Amplitude der Elektrode 34 der Anlegevorrichtung 32 mit Schwingungstilger 44 zeigt und das obere Diagramm die Auslenkung einer Elektrode einer Anlegevorrichtung ohne Schwingungstilger.

In gleicher Weise sind in Figur 7b zwei Graphen dargestellt, die die Schwingungen der Elektrode 34 in horizontaler Richtung nach einer Anregung darstellen, wobei das untere Diagramm die Auslenkung bzw. Amplitude der Elektrode 34 der Anlegevorrichtung 32 mit Schwingungstilger 44 zeigt und das obere Diagramm die Auslenkung einer Elektrode einer Anlegevorrichtung ohne Schwingungstilger.

Gut zu erkennen ist, dass bei Anlegevorrichtungen 32 mit einem Schwingungstilger 44 die Auslenkung bzw. die Amplitude der Schwingung der Elektrode 34 deutlich schneller abgebaut bzw. getilgt wird, als dies ohne Schwingungstilger der Fall ist. Beispielsweise ist eine dreimal schnellere Abklingung der Schwingungen erreicht.

Somit werden Überschläge zwischen der Elektrode 34 und der Kühlwalze 28 zuverlässig verringert, und es kommt seltener zum Eintauchen der Elektrode 34 in die Schmelzfahne aus der Breitschlitzdüse 26.

Zudem wird, sofern vorgesehen, im Betrieb die Elektrode 34 kontinuierlich entlang ihrer Längsrichtung verfahren, d.h. in der ersten Befestigungseinheit 36 abgespult und in der zweiten Befestigungseinheit 38 aufgespult, oder umgekehrt. Auf diese Weise werden Ablagerungen abtransportiert, die durch Ausdampfungen des Kunststoffmaterials der Folie F hervorgerufen werden, wodurch die Homogenität des elektrischen Feldes vergrößert wird bzw. gleichbleibt.

Ablagerungen werden zudem durch die an die Elektroden 34 angelegte Niederspannung verringert. Durch die Niederspannung entsteht ein Strom, auch Heizstrom genannt, durch jede der Elektroden 34 von der ersten Befestigungseinheit 36 zur zweiten Befestigungseinheit 38 (oder umgekehrt) mit einer Stromstärke zwischen 1 A und 8 A.

Zum Beispiel liegt die Stromstärke durch eine als 3-mm-Band ausgeführte Elektrode 34 zwischen 2 und 2,5 A und bei etwa 7 A durch eine als 12,7-mm-Band ausgeführte Elektrode 34. Bei der Verwendung eines Drahts als Elektrode 34 sind die Ströme kleiner.

Die Elektroden sind nicht geerdet, sodass ein Riss der Elektrode 34 eine Unterbrechung des Stroms zur Folge hat.

Durch den Strom heizt sich die Elektrode 34 auf, wodurch sich die Ausdampfungen des Kunststoffmaterials der Folie F weniger stark als Kondensat an der Elektrode 34 niederschlagen.

Somit kann die Qualität der hergestellten Folie F deutlich verbessert und Anlagenstillstandsdauern deutlich verringert werden.

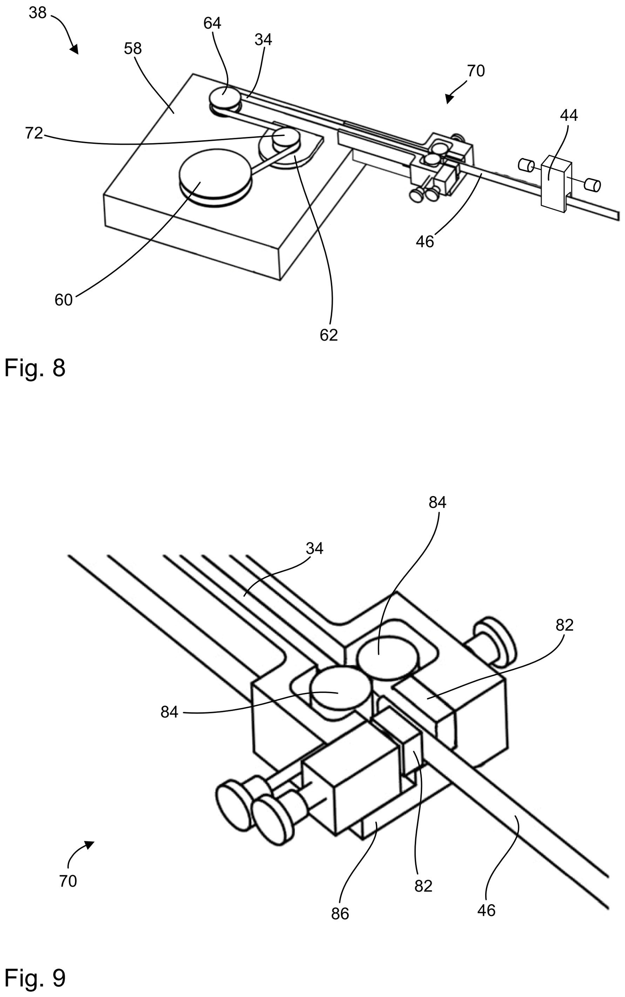

In den Figuren 8 und 9 werden die Befestigungseinheiten 38 der Anlegevorrichtung 32 beschrieben, wobei Figur 8 die zweite Befestigungseinheit 38 in offenem Zustand zeigt und die Figur 9 die Befestigung der entsprechenden Isoliervorrichtung 46 an der zweiten Befestigungseinheit 38.

Die erste Befestigungseinheit 36 ist hierzu entsprechend ausgeführt.

In Figur 8 ist die zweite Befestigungseinheit 38 geöffnet dargestellt. Die zweite Befestigungseinheit 38 befindet sich in Bezug auf Figur 2 auf der linken Seite der Kühlwalze 28.

Die erste Befestigungseinheit 36 auf der rechten Seite der Kühlwalze 28 ist im Wesentlichen identisch aufgebaut, lediglich spiegelbildlich.

Die zweite Befestigungseinheit 38 weist ein Gehäuse 58, eine rotierbare Spule 60, eine Spannungszufuhreinrichtung 62, eine erste Umlenkrolle 64, eine mechanische Spannvorrichtung 66 sowie eine Dämpfungsvorrichtung 70 auf.

Die Elektrode 34 ist teilweise auf der rotierbaren Spule 60 aufgewickelt und verläuft von der rotierbaren Spule 60 zur Spannungszufuhreinrichtung 62.

Die Spannungszufuhreinrichtung 62 ist elektrisch mit der Hochspannungsquelle 42 verbunden und weist eine Rolle 72 auf.

Die Rolle 72 führt die Elektrode 34 und beaufschlagt dabei die Elektrode 34 mit der von der Hochspannungsquelle 42 bereitgestellten Hochspannung.

Anschließend verläuft die Elektrode 34 zur ersten Umlenkrolle 64 und von dort aus der Befestigungseinheit 38 hinaus zum Anlegebereich A.

In der ersten Befestigungseinheit 36 verläuft die Elektrode 34 in umgekehrter Reihenfolge wie zur zweiten Befestigungseinheit 38 beschrieben und schließlich auf eine rotierbare Spule.

Die beiden rotierbaren Spulen 60 der Befestigungseinheiten 36, 38 können angetrieben sein. Auf diese Weise kann die Elektrode 34 zwischen der ersten Befestigungseinheit 36 und der zweiten Befestigungseinheit 38 verfahren werden. Beispielsweise wird die Elektrode 34 von der rotierbaren Spule der ersten Befestigungseinheit 36 abgewickelt, verläuft durch den Anlegebereich A in die zweite Befestigungseinheit 38, wo sie von der rotierbaren Spule 60 der zweiten Befestigungseinheit 38 aufgewickelt wird.

Zudem kann mittels der angetriebenen rotierbaren Spulen 60 der Zug bzw. die mechanische Spannung, und damit die Eigenfrequenz, der Elektrode 34 eingestellt werden.

Denkbar ist auch, dass mehrere der Elektroden 34 auf die gleiche rotierbare Spule 60 aufgewickelt werden. In diesem Falle ist beispielsweise eine gemeinsame rotierbare Spule 60 vorgesehen, die verschiedene Bereiche für die verschiedenen Elektroden 34 aufweist. Die mechanische Spannung, und damit die Eigenfrequenz, der verschiedenen Elektroden 34 kann dann durch eine Spannvorrichtung für jede der Elektroden 34 eingestellt werden.

Die Dämpfungsvorrichtungen 70 stellen den Ausgang der Befestigungseinheiten 36, 38 dar.

Die Dämpfungsvorrichtungen 70 sind an einem Ausleger 62 vorgesehen, der sich vom Gehäuse 58 der jeweiligen Befestigungseinheit 36, 38 in Richtung zum Anlegebereich A hin erstreckt.

Insbesondere ist die Länge des Auslegers 62 verstellbar, beispielsweise mittels eines Motors und eines Zahnstangengetriebes.

An den Dämpfungsvorrichtungen 70 sind die Isoliervorrichtungen 46 mittels einer Befestigungsvorrichtung 80 befestigt, wie in Figur 9 zu sehen ist.

Die Befestigungsvorrichtung 80 hat beispielsweise schwingungsdämpfende Elemente 82, wie Dämpfer aus elastischem Material, zwischen denen die Isoliervorrichtung 46 geklemmt ist. Die Klemmung kann zum Beispiel mittels einer Schraube eingestellt werden.

Die Dämpfungsvorrichtung 70 ist in Figur 9 vergrößert dargestellt.

Die Dämpfungsvorrichtung 70 weist zwei Dämpfungsrollen 84 auf, die auf je einem Lagerblock 86 befestigt sind.

Jeder Lagerblock 86 ist federnd senkrecht zu den Seitenflächen der Elektroden 34 gelagert, sodass auch die Dämpfungsrollen 84 federnd gelagert sind.

Jede der Dämpfungsrollen 84 ist um eine Rotationsachse rotierbar, die senkrecht zur Längsrichtung und parallel zur Richtung der Breite der Elektrode 34 ist. In anderen Worten erstrecken sich die Rotationsachse parallel zu den Seitenflächen, aber senkrecht zur Längsrichtung der Elektrode 34.

Die Elektrode 34 ist zwischen den beiden Dämpfungsrollen 84 hindurchgeführt, wobei je eine der Dämpfungsrollen 84 die Seitenfläche der Elektrode 34 berührt.

Die Dämpfungsvorrichtung 70 führt zu einer Dämpfung von Schwingungen der Elektrode 34 und somit zu einem noch schnelleren Abklingen von Schwingungen der Elektrode 34.

Auch andere Dämpfungsvorrichtungen sind denkbar, beispielsweise wie solche, die in der DE 10 2022 118 971 A1 beschrieben sind.

In einer weiteren Ausführungsform können zwei Elektroden 34 vorgesehen sein, die jeweils durch wenigstens eine Isoliervorrichtung 46 verlaufen. Vorzugsweise verläuft jede der Elektroden 34 jedoch durch zwei Isoliervorrichtungen 46.

In Falle von zwei Elektroden 34 sind zumindest zwei Schwingungstilger 44 vorgesehen, wobei jeweils ein Schwingungstilger 44 an einer der Isoliervorrichtungen 46 je einer der Elektroden 34 befestigt ist und die Eigenfrequenz der entsprechenden Elektrode 34 hat.

Die Schwingungstilger 44 der unterschiedlichen Elektroden 34 können entweder auf der gleichen Seite des Folienabschnitts B, beispielsweise nebeneinander, oder auf unterschiedlichen Seiten des Folienabschnitts B, beispielsweise gegenüber voneinander, angeordnet sein.

Für den Fall, dass die beiden Elektroden 34 unterschiedliche Eigenfrequenzen haben, können trotzdem die gleichen Schwingungstilger 44 wie zur ersten Ausführungsform beschrieben verwendet werden, sofern die beiden Eigenfrequenzen der Schwingungstilger 44 den unterschiedlichen Eigenfrequenzen der beiden Elektroden 34 entsprechen.

Denkbar ist zudem, dass bei der Verwendung von zwei Elektroden 34 vier Schwingungstilger 44 zum Einsatz kommen, wobei für jede Isoliervorrichtung 46 jeweils ein Schwingungstilger 44 vorgesehen ist.

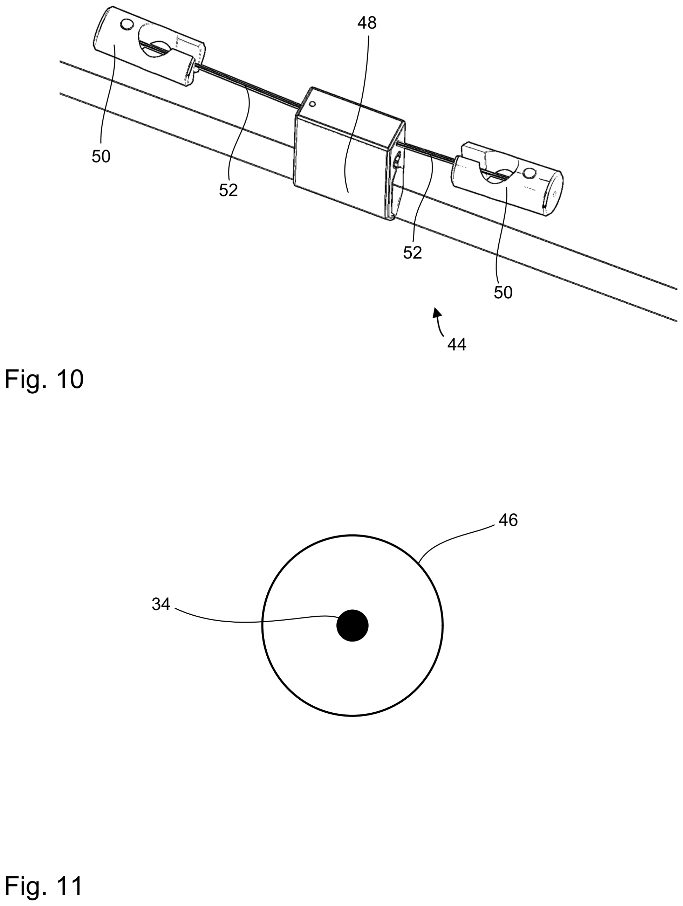

Die Figuren 10 und 11 zeigen weitere Ausführungsformen der Erfindung, die im Wesentlichen denjenigen der ersten oder zweiten Ausführungsform entsprechen. Im Folgenden wird daher lediglich auf die Unterschiede eingegangen, und gleiche und funktionsgleiche Teile sind mit denselben Bezugszeichen versehen.

Obwohl sich die Erläuterung der weiteren Ausführungsformen auf die erste oder zweite Ausführungsform bezieht, sind die Merkmale aller Ausführungsformen ohne Weiteres auch miteinander kombinierbar.

In Figur 10 ist ein Schwingungstilger 44 einer Anlegevorrichtung 32 gemäß einer dritten Ausführungsform perspektivisch dargestellt.

In dieser Ausführungsform sind die Tilgermassen 50 U-förmig ausgestaltet, wobei der Scheitel der U-Form am Verbinder 52 befestigt ist. Die Schenkel der U-Form erstrecken sich zur Basis 48 hin und können an ihren Enden verdickt sein.

Solche Schwingungstilger 44 weisen vier Eigenfrequenzen auf und sind somit für viele verschiedene Elektroden 34 und/oder Einbausituationen, insbesondere unterschiedliche mechanische Spannungen, geeignet.

In Figur 11 ein Querschnitt durch die Elektrode 34 und der zugehörigen Isoliervorrichtung 46 einer vierten Ausführungsform gezeigt. In dieser Ausführungsform ist die Elektrode 34 ein Draht mit einem kreisförmigen Querschnitt. Entsprechend ist die Isoliervorrichtung 46 an den Querschnitt der Elektrode 34 angepasst. Die Isoliervorrichtung 46 hat einen ringförmigen Querschnitt, wobei im Inneren des Rings die Elektrode 34 verläuft.

## Patentansprüche

1. Anlegevorrichtung zum elektrostatischen Anlegen einer Folie (F) an eine Kühlwalze (28), mit einer ersten Befestigungseinheit (36), einer zweiten Befestigungseinheit (38), einem zwischen den Befestigungseinheiten (36, 38) liegenden Anlegebereich (A), einer Hochspannungsquelle (42), einer Elektrode (34), wenigstens einer Isoliervorrichtung (46) und wenigstens einem Schwingungstilger (44),
wobei sich die wenigstens eine Isoliervorrichtung (46) von der zugehörigen Befestigungseinheit (36, 38) zum Folienabschnitt (B) hin erstreckt,
wobei die Elektrode (34) von der ersten Befestigungseinheit (36) zur zweiten Befestigungseinheit (38) im Anlegebereich (A) und durch die wenigstens eine Isoliervorrichtung (46) verläuft, und die Elektrode (34) durch die Hochspannungsquelle (42) mit Hochspannung beaufschlagt ist, und
wobei der Schwingungstilger (44) an der wenigstens einen Isoliervorrichtung (46) befestigt ist und dazu ausgebildet ist, Schwingungen der Elektrode (34) zu tilgen.

2. Anlegevorrichtung nach Anspruch 1, **dadurch gekennzeichnet, dass** der Schwingungstilger (44) eine Eigenfrequenz aufweist, die einer Eigenfrequenz der Elektrode (34) entspricht, insbesondere der niedrigsten Eigenfrequenz der Elektrode (34).

3. Anlegevorrichtung nach Anspruch 1 oder 2, **dadurch gekennzeichnet, dass** der Schwingungstilger (44) eine Basis (48), wenigstens eine Tilgermasse (50) und wenigstens einen federnden Verbinder (52) aufweist, wobei die Tilgermasse (50) mittels des federnden Verbinders (52) an der Basis (48) beweglich befestigt ist, insbesondere wobei die Basis (48) an der Isoliervorrichtung (46) befestigt ist.

4. Anlegevorrichtung nach Anspruch 3, **dadurch gekennzeichnet, dass** der Schwingungstilger (44) zwei Tilgermassen (50) und zwei federnde Verbinder (52) aufweist, wobei die beiden Tilgermassen (50) gleich oder unterschiedlich sind und/oder mittels des jeweiligen federnden Verbinders (52) in gleichem Abstand (a) oder in unterschiedlichen Abständen (a₁, a₂) zur Basis (48) an der Basis (48) befestigt sind.

5. Anlegevorrichtung nach Anspruch 3 oder 4, **dadurch gekennzeichnet, dass** die wenigstens eine Tilgermasse (50) ein Gewichtstück ist und/oder der wenigstens eine federnde Verbinder (52) ein federnder Stab ist.

6. Anlegevorrichtung nach einem der vorhergehenden Ansprüche, **dadurch gekennzeichnet, dass** die Anlegevorrichtung (32) zwei Isoliervorrichtungen (46) aufweist, die sich von je einer der entgegengesetzten Befestigungseinheiten (36, 38) aufeinander zu erstrecken.

7. Anlegevorrichtung nach einem der vorhergehenden Ansprüche, **dadurch gekennzeichnet, dass** die wenigstens eine Elektrode (34) bandförmig oder drahtförmig ist, insbesondere ein Draht ist.

8. Anlegevorrichtung nach einem der vorhergehenden Ansprüche, **dadurch gekennzeichnet, dass** die wenigstens eine Elektrode (34) zwischen der ersten Befestigungseinheit (36) und der zweiten Befestigungseinheit (38) in ihre Längsrichtung verfahrbar ist, insbesondere wobei in der ersten und in der zweiten Befestigungseinheit (36, 38) wenigstens eine rotierbare Spule (60) vorgesehen ist, auf der die wenigstens eine Elektrode (34) teilweise aufgewickelt ist.

9. Anlegevorrichtung nach einem der vorhergehenden Ansprüche, **dadurch gekennzeichnet, dass** der Anlegebereich (A) einen Folienabschnitt (B) aufweist, der dem Abschnitt der Kühlwalze (28) entspricht, in dem die Folie aufgetragen wird, wobei der wenigstens eine Schwingungstilger (44) außerhalb des Folienabschnitts (B) angeordnet ist.

10. Anlegevorrichtung nach Anspruch 9, **dadurch gekennzeichnet, dass** die Anlegevorrichtung (32) zwei Schwingungstilger (44) aufweist, wobei die Schwingungstilger (44) auf unterschiedlichen Seiten des Folienabschnitts (B) angeordnet sind.

11. Anlegevorrichtung nach einem der vorhergehenden Ansprüche, **dadurch gekennzeichnet, dass** die Anlegevorrichtung (32) wenigstens zwei Elektroden (34), wenigstens zwei Isoliervorrichtungen (46) und wenigstens zwei Schwingungstilger (44) aufweist, wobei die Schwingungstilger (44) an den Isoliervorrichtungen (46) unterschiedlicher Elektroden (34) befestigt sind, insbesondere wobei die Schwingungstilger (44) für unterschiedliche Elektroden (34) auf der gleichen oder unterschiedlichen Seiten des Folienabschnitts (B) angeordnet sind.

12. Anlegevorrichtung nach einem der vorhergehenden Ansprüche, **dadurch gekennzeichnet, dass** die erste Befestigungseinheit (36) und/oder die zweite Befestigungseinheit (38) eine Dämpfungsvorrichtung (70) aufweist, die dazu eingerichtet ist, Schwingungen der der Elektrode (34) im Anlegebereich (A) zu dämpfen.

13. Casting-Unit mit einer Breitschlitzdüse (26), einer Kühlwalze (28) und einer Anlegevorrichtung (32) nach einem der vorhergehenden Ansprüche, insbesondere wobei die Kühlwalze (28) geerdet ist.

14. Anlage zum Herstellen einer Folie, mit einer Casting-Unit (12) nach Anspruch 13 und einer Reckanlage (16, 18), insbesondere einer Quer-, Längs- und/oder Simultan-Reckanlage, mit einem Ofen (30).
